# EUROPÄISCHE PATENTSCHRIFT

(11) **EP 0 607 213 B1**
(45) Veröffentlichungstag und Bekanntmachung des Hinweises auf die Patenterteilung: **02.01.1997**
(21) Anmeldenummer: 92920737.1
(22) Anmeldetag: 09.10.1992
(51) Int. Cl.: C08F 2/44, C08F 292/00, G02B 1/00

(54) **NANOSKALIGE TEILCHEN ENTHALTENDE KOMPOSITMATERIALIEN, VERFAHREN ZU DEREN HERSTELLUNG UND DEREN VERWENDUNG FÜR OPTISCHE ELEMENTE**
COMPOSITE MATERIALS CONTAINING NANOSCALAR PARTICLES, PROCESS FOR PRODUCING THEM AND THEIR USE FOR OPTICAL COMPONENTS
MATERIAUX COMPOSITES CONTENANT DES PARTICULES NANOMETRIQUES, LEUR PROCEDE DE PRODUCTION ET LEUR UTILISATION DANS DES ELEMENTS OPTIQUES

(30) Priorität: 10.10.1991 DE 4133621
(43) Veröffentlichungstag der Anmeldung: 27.07.1994
(73) Patentinhaber: INSTITUT FÜR NEUE MATERIALIEN gemeinnützige GmbH, D-66123 Saarbrücken (DE)
(72) Erfinder: SPANHEL, Lubomir, D-6602 Dudweiler (DE); ARPAC, Ertugrul Akdeniz Üniversitesi, Antalia (TR); NASS, Rüdiger, D-6601 Riegelsberg (DE); SCHMIDT, Helmut, D-6604 Saarbrücken-Güdingen (DE)
(74) Vertreter: Barz, Peter, Dr.
(86) Internationale Anmeldenummer: EP9202327
(87) Internationale Veröffentlichungsnummer: WO9307179

(56) Entgegenhaltungen:
- EP-A- 0 220 026
- EP-A- 0 351 759
- US-A- 5 030 608

## Beschreibung

Die Erfindung betrifft Kompositmaterialien, die nanoskalige Teilchen (im folgenden auch "Cluster" genannt) in einer Polymermatrix enthalten. Ferner betrifft die Erfindung ein Verfahren zur Herstellung derartiger Kompositmaterialien, bei dem Sole von nanoskaligen Metallantimoniden, -arseniden, -chalkogeniden, -halogeniden oder -phosphiden unter Verwendung spezieller Stabilisatoren stabilisiert und anschließend in eine Polymermatrix einkondensiert oder einpolymerisiert werden. Schließlich betrifft die Erfindung die Verwendung der auf diese Weise hergestellten transparenten Kompositmaterialien für optische Elemente.

Kompositmaterialien, die in einer organischen Polymermatrix ein verstärkendes anorganisches Polykondensatgerüst aufweisen, sind aus der EP-A-351 759 bekannt. In der US-A-5 030 608 werden Metalloxid- oder Metallteilchen in einer Oxidmatrix enthaltende Komposite durch Oxidation von Polykondensaten aus Metallverbindungskomplexen und gegebenenfalls anschließende Reduktion hergestellt.

Gegenstand der Erfindung ist ein Verfahren zur Herstellung von nanoskalige Teilchen enthaltenden Kompositmaterialien, bei dem man in einem organischen Lösungsmittel
a) eine in dem Lösungsmittel lösliche Verbindung eines Metalls der Gruppen 6 bis 15 des Periodensystems oder der Lanthaniden mit
b) einem Fällungsreagenz zur Bildung von Antimoniden, Arseniden, Chalkogeniden, Halogeniden oder Phosphiden des Metalls der Metallverbindung (a) in Gegenwart von
c) einer bifunktionellen Verbindung, die mindestens eine Elektronenpaar-Donorgruppe und mindestens eine durch Polymerisation oder Polykondensation in ein organisches oder anorganisches Netzwerk überführbare Gruppe aufweisen,
umsetzt, das erhaltene stabilisierte Sol von nanoskaligen Teilchen mit
d) einer thermisch oder photochemisch zu einem Polymer härtbaren oder polymerisierbaren Verbindung und
e) einem Polymerisationsinitiator
vermischt, eine Hydrolyse und Polykondensation der gegebenenfalls anwesenden, in ein anorganisches Netzwerk überführbaren Gruppen durchführt und das Material thermisch oder photochemisch härtet.

In der vorliegenden Anmeldung beziehen sich alle Hinweise auf das Periodensystem der Elemente auf die IUPAC-Empfehlung von 1986. Unter Chalkogeniden werden Oxide (einschließlich Oxid-hydrate, Oxid/Hydroxide und Hydroxide), Sulfide, Selenide und Telluride verstanden. Der Ausdruck Halogenide umfaßt Fluoride, Chloride, Bromide und Iodide.

Als Ausgangsmaterialien werden im erfindungsgemäßen Verfahren in organischen Lösungsmitteln lösliche Verbindungen von Metallen der Gruppen 6 bis 15 des Periodensystems oder der Lanthaniden eingesetzt.

Spezielle Metalle sind Cr, Mo, W (Gruppe 6), Mn, Re (Gruppe 7), Fe, Ru (Gruppe 8), Co, Rh (Gruppe 9), Ni, Pd, Pt (Gruppe 10), Cu, Ag, Au (Gruppe 11), Zn, Cd, Hg (Gruppe 12), Al, Ga, In (Gruppe 13), Ge, Sn, Pb (Gruppe 14) und As, Sb, Bi (Gruppe 15) sowie La, Ce, Gd, Pr, Nd, Sm, Eu, Er, Tb (Lanthaniden).

Als Metallverbindungen (a) eignen sich im verwendeten Lösungsmittel lösliche Verbindungen, beispielsweise Salze (z. B. Halogenide, Sulfate, Nitrate, Phosphate), Komplexsalze (z. B. Tetrafluoroborate, Hexachloroplatinate), Alkoholate (z. B. Methylate, Ethylate, Isopropylate, Butylate, Glykolate), Phenolate, Carbonate, Carboxylate (z.B. Formiate, Acetate, Propionate, Oxalate, Succinate, Benzoate), Hydride, Komplexe (Koordinationsverbindungen wie Amminkomplexe, Aminkomplexe, Cyanokomplexe und Chelate wie Acetylacetonate, Aminocarboxylate), metallorganische Verbindungen (z. B. Carbonyl-, Nitrosyl, σ- und π-Komplexe).

Das Fällungsreagenz (b) ist eine Verbindung, die bei der Reaktion mit der Metallverbindung (a) ein Antimonid, Arsenid, Chalkogenid, Halogenid oder Phosphid des Metalls bildet. Als Fällungsreagenzien (b) kommen beispielsweise im Reaktionsmedium lösliche Salze (z. B. Alkali- oder Erdalkalimetallsalze) der entsprechenden Anionen (Antimonide, Arsenide, Hydroxide, Sulfide, Selenide, Telluride, Fluoride, Chloride, Bromide, Iodide, Phosphide) oder entsprechende Wasserstoffverbindungen in Frage (z. B. SbH₃, AsH₃, H₂S, H₂Se, H₂Te, HCl, HBr, HI, PH₃). Ferner können als Fällungsreagenzien (b) reaktive Verbindungen eingesetzt werden, die das eigentliche Fällungsmittel in situ freisetzen. Beispiele hierfür sind die Freisetzung von H₂S aus Tetrasulfiden durch Reaktion mit NaBH₄, die Erzeugung von Hydroxylionen durch Ammoniak, Amine (z. B. Alkylamine, Hexamethylentetramin) oder Harnstoff und die Erzeugung von Halogenwasserstoffsäuren durch Hydrolyse von Carbonsäurehalogeniden.

Die Metallverbindung (a) und das Fällungsreagenz (b) werden jeweils so gewählt, daß eine im Reaktionsmedium unlösliche oder schwerlösliche Verbindung in Form eines Sols entsteht.

Spezielle Beispiele für herstellbare nanoskalige Teilchen sind Oxide wie ZnO, CdO, SiO₂, TiO₂, ZrO₂, CeO₂, SnO₂, Al₂O₃, In₂O₃, La₂O₃, Fe₂O₃, Cu₂O, MoO₃ oder WO₃; Sulfide wie CdS, ZnS, PbS oder Ag₂S; Selenide wie GaSe, CdSe oder ZnSe; Telluride wie ZnTe oder CdTe; Halogenide wie AgCl, AgBr, AgI, CuCl, CuBr, CdI₂ oder PbI₂; Arsenide wie AlAs, GaAs oder GeAs; Antimonide wie InSb; und Phosphide wie GaP, InP, Zn₃P₂ oder Cd₃P₂.

Selbstverständlich können alle Reaktionspartner und sonstige im erfindungsgemäßen Verfahren eingesetzte Substanzen sowohl in Form von einzelnen Verbindungen als auch in Form von Mischungen aus zwei oder mehreren Verbindungen angewandt werden.

Die bifunktionelle Verbindung (c) enthält mindestens eine Elektronenpaar-Donorgruppe oder eine Gruppe, die in eine solche Elektronenpaar-Donorgruppe überführt werden kann. Die Elektronenpaar-Donorgruppe kann neutral oder elektrisch negativ geladen sein und leitet sich gewöhnlich von Atomen wie O, N oder S ab. Derartige Gruppen sind z. B. primäre, sekundäre oder tertiäre Amin- oder Amidgruppen, Nitril-, Isonitril-, Cyanat-, Isocyanat-, Thiocyanat-, Isothiocyanat-, Azid-, Thiol-, Thiolat-, Sulfid-, Sulfinat-, Sulfonat-, Phosphat-, Hydroxyl-, Alkoholat-, Phenolat-, Carbonyl- und Carboxylatgruppen. In eine Elektronenpaar-Donorgruppe überführbare Gruppen sind z. B. die Carbonsäure- oder Carbonsäureanhydridgruppe und die Glycidylgruppe.

Bifunktionelle Verbindungen (c) mit mehreren Elektronenpaar-Donorgruppen enthalten z. B. eine Ethylendiamingruppe oder entsprechende ganz oder teilweise alkylierte Gruppen, eine Glykol- oder Glykolatgruppe, einen Ketocarbonsäure- oder Ketocarbonsäureestergruppe, eine β-Dicarbonylgruppe (z. B. Acetylactonatgruppe), eine β-Ketoestergruppe (z. B. Acetessigsäureethyl-, -allyl- oder -vinylestergruppe) oder eine (Meth)acrylsäuregruppe.

Zusätzlich enthält die bifunktionelle Verbindung (c) mindestens eine durch Polykondensation in ein anorganisches Netzwerk überführbare Gruppe. Diese Gruppen leiten sich von Elementen wie Si, Al, B, Sn, Ti, Zr, Ge, P, As oder V, vorzugsweise Si, Al, Ti oder Zr, als Zentralatomen ab, an die mindestens zwei hydrolysierbare bzw. polykondensierbare Gruppe gebunden sind, z. B. Wasserstoff, Hydroxy, Halogen, Alkoxy, Alkoxyalkyl, Acyl, Acyloxy, Alkoxycarbonyl oder NR₂ (R = H und/oder Alkyl). Bifunktionelle Verbindungen dieser Art sind z. B. in der US-PS 5030608 genannt.

Alternativ enthält die bifunktionelle Verbindung (c) mindestens eine durch Polymerisation in ein organisches Netzwerk überführbare Gruppe. Beispiele für diese Gruppen sind die Epoxygruppe sowie Reste mit Doppel- oder Dreifachbindungen, wie Vinyl, Allyl, (Meth)acryl und Ethinyl.

Die Elektronenpaar-Donorgruppe und die in ein organisches oder anorganisches Netzwerk überführbare Gruppe der bifunktionellen Verbindung (c) sind entweder direkt aneinander gebunden oder vorzugsweise über eine Brückengruppe (z. B. Alkylen oder Arylen) miteinander verbunden.

Spezielle Beispiele für geeignete bifunktionelle Verbindungen (c) sind:

H₂N-(CH₂)₃-Si(OC₂H₅)₃, (C₂H₅)₂N(CH₂)₃Si(OC₂H₅)₃,

(CH₃)₂N(CH₂)₃Si(OC₂H₅)₃, H₂N-C₆H₄-Si(OCH₃)₃,

(CH₃)₂N-CH₂-CH₂-N(CH₃)-(CH₂)₃-Si(OC₂H₅)₃,

H₂N-CH₂-CH₂-NH-(CH₂)₃-Si(OCH₃)₃,

H₂N-(CH₂)₂-NH-(CH₂)₂-NH-(CH₂)₃-Si(OCH₃)₃,

CN-(CH₂)₃-Si(OCH₃)₃, HOOC-HC=CH-O-(CH₂)₃-Si(OCH₃)₃,

OCN-CH₂-CH₂-CH₂-Si(OC₂H₅)₃, HS-CH₂-CH₂-CH₂-Si(OC₂H₅)₃,

HS-CH₂-Si(OC₂H₅)₃, ⁻OOC-CH₂-CH₂-CH₂-Si(OC₂H₅)₃,

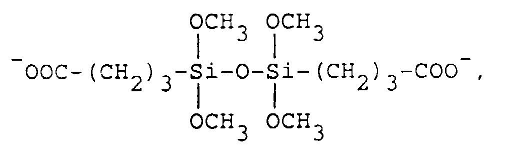

(H₅C₂O)₃Si-(CH₂)₃-S-S-S-S-(CH₂)₃-Si(OC₂H₅)₃,

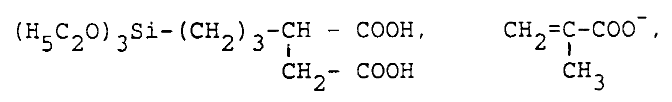

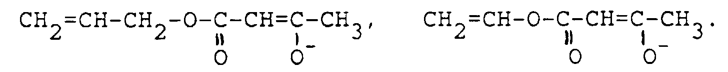

Die Reaktion der Metallverbindung (a) mit dem Fällungsreagenz (b) in Gegenwart der bifunktionellen Verbindung (c) kann z. B. bei Temperaturen von 0°C bis zum Siedepunkt des verwendeten Lösungsmittels durchgeführt werden. Vorzugsweise wird bei Raumtemperatur gearbeitet.

Auch der Reaktionsdruck ist unkritisch. Gewöhnlich erfolgt die Umsetzung bei Atmosphärendruck; es kann aber auch bei erhöhtem oder verringertem Druck gearbeitet werden.

Als organische Lösungsmittel werden erfindungsgemäß vorzugsweise Alkohole, wie Methanol, Ethanol, Propanol und Butanol, Ether, wie Diethylether, Dibutylether und Tetrahydrofuran, Etheralkohole, wie Butoxyethanol, Ester, wie Essigsäureethylester, aliphatische und cycloaliphatiche Kohlenwasserstoffe, wie Pentan, Hexan und Cyclohexan, sowie aromatische Kohlenwasserstoffe, wie Toluol, angewandt.

Die Reaktion erfolgt innerhalb einiger Minuten bis einiger Stunden. Vorzugsweise wird unter Inertgasschutz (z. B. Stickstoff, Argon, Kohlendioxid) gearbeitet.

Das Fällungsreagenz (b) wird im allgemeinen mindestens in der stöchiometrisch erforderlichen Menge, vorzugsweise in geringem Überschuß, bezogen auf die Metallverbindung (a) angewandt.

Das Molverhältnis der Metallverbindung (a) zu der bifunktionellen Verbindung (c) beträgt vorzugsweise 1:1 bis 1:50, insbesondere 1:5 bis 1:20.

Das bei der Reaktion entstehende, durch die bifunktionelle Verbindung (c) stabilisierte Sol von nanoskaligen Teilchen wird, gegebenenfalls nach teilweiser Abtrennung des Lösungsmittels, mit einer thermisch oder photochemisch zu einem Polymer härtbaren oder polymerisierbaren Verbindung (d) und einem Polymerisationsinitiator (e) vermischt.

Gegebenenfalls kann ein Teil der thermisch oder photochemisch zu einem Polymer härtbaren oder polymerisierbaren Verbindung (d) durch ein entsprechendes fertiges Polymer (f) ersetzt werden, das zusätzlich z. B. in Form einer organischen Lösung zugemischt wird.

Als Polymere (f) eignen sich beliebige bekannte Kunststoffe, z. B. Polyacrylsäure, Polymethacrylsäure, Polyacrylate, Polymethacrylate, Polyolefine, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylen-vinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide, Fluorpolymere, z. B. Polytetrafluorethylen, und Organopolysiloxane. Vorzugsweise weisen transparente Polymere (f) angewandt.

Bei der thermisch oder photochemisch zu einem Polymer härtbaren oder polymerisierbaren Verbindung (d) handelt es sich in der Regel um ein polykondensierbares oder polymerisierbares, ungesättigte Gruppen aufweisendes Monomer, Oligomer oder Prepolymer, das bei der thermisch oder photochemisch initiierten Polymerisation oder bei der (gegebenenfalls Säure- oder Basen-katalysierten) Polykondensation eines der oben genannten Polymeren ergibt.

Spezielle Beispiele für polymerisierbare Monomere (d), die eine rein organische Polymermatrix ergeben, sind (Meth)acrylsäure, (Meth)acrylsäureester, (Meth)acrylnitril, Styrol und Styrolderivate, Alkene (z. B. Ethylen, Propylen, Buten, Isobuten), halogenierte Alkene (z. B. Tetrafluorethylen, Chlortrifluorethylen, Vinylchlorid, Vinylfluorid, Vinylidenfluorid, Vinylidenchlorid), Vinylacetat, Vinylpyrrolidon, Vinylcarbazol und Gemische derartiger Monomere. Auch mehrfach ungesättigte Monomere (d) können angewandt werden, z. B. Butadien und Ethylendimethacrylat.

Beispiele für Monomere (d), die eine organisch/anorganische oder rein anorganische Polymermatrix ergeben, sind hydrolysierbare und kondensierbare Verbindungen von Elementen der Gruppen 3 bis 6 und 13 bis 15 des Periodensystems oder von Lanthaniden-Elementen. Bei diesen hydrolysierbaren und kondensierbaren Verbindungen handelt es sich vorzugsweise um solche von Si, Al, B, Pb, Sn, Ti, Zr, V und Zn, insbesondere solche von Si, Al, Ti und Zr oder Mischungen davon. Es können aber auch andere hydrolysierbare Verbindungen eingesetzt werden, insbesondere solche von Elementen der Gruppen 1 und 2 des Periodensystems (z.B. Na, K, Ca und Mg) oder der Gruppen 7 bis 10 des Periodensystems (z.B. Mn, Fe, Co und Ni). Vorzugsweise machen die soeben genannten Verbindungen aber nicht mehr als 20 und insbesondere nicht mehr als 10 Mol-% der insgesamt eingesetzten hydrolysierbaren monomeren Verbindungen aus.

Beispiele für hydrolysierbare Gruppen in diesen Verbindungen sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl).

Neben den oben genannten hydrolysierbaren Gruppen können als weitere geeignete Gruppen erwähnt werden Wasserstoff und Alkoxyreste mit 5 bis 20, insbesondere 5 bis 10 Kohlenstoffatomen und Halogen- und Alkoxy-substituierte Alkoxygruppen (wie z.B. β-Methoxyethoxy).

Da die hydrolysierbaren Gruppen im Endprodukt praktisch nicht mehr vorhanden sind, sondern durch Hydrolyse verlorengehen, wobei das Hydrolyseprodukt früher oder später auch in irgendeiner geeigneten Weise entfernt werden muß, sind solche hydrolysierbare Gruppen besonders bevorzugt, die keine Substituenten tragen und zu Hydrolyseprodukten mit niedrigem Molekulargewicht, wie z.B. niederen Alkoholen, wie Methanol, Ethanol, Propanol, n-, i, sek- und tert-Butanol, führen. Die letztgenannten Gruppen sind auch deshalb bevorzugt, weil sie bei der Hydrolyse den pH-Wert praktisch nicht beeinflussen (im Gegensatz zu z.B. Halogen), was von Vorteil ist, weil der pH-Wert der Ausgangsmischung vorzugsweise im Bereich von 4 bis 9, insbesondere 5 bis 6,5, liegt und Hydrolyseprodukte, die den pH-Wert merklich aus diesem Bereich heraus verschieben, vorzugsweise durch Zugabe geeigneter Substanzen (Säuren oder Basen) neutralisiert werden.

Die nicht-hydrolysierbaren Gruppen der eingesetzten polykondensierbaren Monomeren (d) werden vorzugsweise ausgewählt aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl) und Aryl (insbesondere C₆₋₁₀-Aryl, wie z.B. Phenyl und Naphthyl), wobei die soeben genannten Gruppen gegebenenfalls einen oder mehrere Substituenten, wie z.B. Halogen, Hydroxy, Alkoxy, Epoxy, gegebenenfalls substituiertes Amino usw. aufweisen können. Die obigen Alkylreste schließen auch die entsprechenden cyclischen und aryl-substituierten Reste, wie z.B. Cyclohexyl und Benzyl, ein, während die Alkenyl- und Alkinylgruppen ebenfalls cyclisch sein können und die genannten Arylgruppen auch Alkarylgruppen (wie Tolyl und Xylyl) mit einschließen sollen. Besonders bevorzugte nicht-hydrolysierbare Gruppen sind solche, die über eine (mehrfach) ungesättigte Kohlenstoff-Kohlenstoff-Bindung verfügen. In diesem Zusammenhang sind insbesondere zu erwähnen Gruppen, die über einen (Meth)acryloxyrest verfügen, insbesondere einen (Meth)acryloxy-C₁₋₄-alkylrest wie z.B. (Meth)acryloxypropyl.

Spezielle Beispiele für solche Monomeren (d) sind Organosilane (z. B. 3-Glycidyloxypropyltrimethoxysilan, 3-Methacryloxypropyltrimethoxysilan oder Vinylsilane). Als Monomere (d) eignen sich ferner Silicium-, Aluminium-, Titan- und Zirkonalkoxide, -acylate und -halogenide und andere z. B. in der US-PS 5030608 genannte Netzwerkbildner.

Die Verbindung (d) und/oder das Polymer (f) können entweder als solche oder vorzugsweise als Lösung in einem organischen Lösungsmittel eingesetzt werden. Das hierbei verwendete Lösungmittel ist entweder identisch mit dem in der vorangehenden Fällungsreaktion verwendeten Lösungsmittel oder damit mischbar.

Die Verbindung (d) und das gegebenenfalls zugemischte Polymer (f) werden im allgemeinen in solchen Mengen verwendet, daß das erhaltene Kompositmaterial 0,01 bis 90 Gewichtsprozent nanoskalige Teilchen und 10 bis 99,99 Gewichtsprozent Polymermatrix enthält. Im Falle der Verwendung des Polymers (f) beträgt dessen Anteil an der Gesamtmenge von Polymer (f) und Verbindung (d) mindestens 1 Gewichtsprozent und maximal 95 Gewichtsprozent, vorzugsweise maximal 50 Gewichtsprozent.

Als Polymerisationsinitiatoren (e), welche die Polymerisation und Vernetzung der vorhandenen ungesättigten Verbindungen thermisch und/oder photochemisch induzieren können, eignen sich z.B. die im Handel erhältlichen Photoinitiatoren. Beispiele hierfür sind Irgacure^{R} 184 (1-Hydroxycyclohexylphenylketon), Irgacure ^{R} 500 (1-Hydroxycyclohexylphenylketon, Benzophenon) und andere von der Firma Ciba-Geigy erhältliche Photoinitiatoren vom Irgacure^{R}-Typ; Darocur^{R} 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als thermische Initiatoren kommen u.a. organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele für derartige thermische Initiatoren sind Dibenzoylperoxid, tert.-Butylperbenzoat und Azobisisobutyronitril.

Die Polykondensation induzierende Polymerisationskatalysatoren (e) sind z. B. Brönsted-Säuren und -Basen, wie Mineralsäuren oder tertiäre Amine, für die anionische Polykondensation und Lewis-Säuren, wie Metallalkoholate (z. B. Aluminiumalkoholate im Falle von Epoxysilanen) für die kationische Polykondensation.

Der Polymerisationsinitiator (e) wird gewöhnlich in einer Menge von 0,1 bis 5, vorzugsweise 0,5 bis 3 Gewichtsprozent, bezogen auf die Mischung, angewandt.

Falls die verwendeten Reaktionskomponenten in ein anorganisches Netzwerk überführbare Gruppen enthalten, wird durch Zugabe von Wasser eine Hydrolyse und Polykondensation dieser Gruppen durchgeführt. Das Molverhältnis von insgesamt zugegebenem Wasser zu den hydrolysierbaren Gruppen in allen eingesetzten Ausgangsverbindungen liegt dabei vorzugsweise im Bereich von 1:1 bis 0,3: 1, insbesondere 0,7:1 bis 0,5:1. Die Polykondensation kann z. B. an der Luft bei Temperaturen von 0°C bis zum Siedepunkt des verwendeten Lösungsmittels, gewöhnlich bei Raumtemperatur, durchgeführt werden. Das Reaktionsende kann z. B. durch Karl-Fischer-Titration bestimmt werden.

Die Reaktionsmischung kann entweder als solche oder nach teilweiser oder vollständiger Entfernung des eingesetzten organischen Lösungsmittels bzw. des während der Reaktion gebildeten Lösungsmittels (z.B. der durch Hydrolyse der Alkoxide entstandenen Alkohole) weiterverarbeitet werden.

Im Falle der Herstellung von Beschichtungen wird die Reaktionsmischung in Abhängigkeit von ihrer Viskosität entweder direkt oder nach teilweiser Abtrennung des Lösungsmittels oder nach Zugabe von weiterem Lösungsmittel auf ein Substrat aufgebracht und dann getrocknet.

Im Falle der Herstellung von Formkörpern kann man die Reaktionsmischung z. B. in geeignete Formen eingießen und dann das Lösungsmittel vollständig abziehen, so daß ein Gel zurückbleibt.

Anschließend wird das Material in Abhängigkeit von der Art der Polymermatrix und des verwendeten Polymerisationsinitiators (e) thermisch und/oder durch Bestrahlung mit aktinischer Strahlung (z. B. UV-Licht oder Laserstrahlen) gehärtet. Die Härtungsbedingungen (Temperatur, UV-Wellenlänge, etc.) richten sich im Falle der Polymerisation ungesättigter Gruppen nach den Zerfallsbedingungen des Polymerisationsinitiators. Die thermische Härtung erfolgt gewöhnlich bei Temperaturen unter 150°C.

Die erfindungsgemäßen Kompositmaterialien enthalten nanoskalige Teilchen (Cluster) mit einer durchschnittlichen Partikelgröße von etwa 0,5 bis 20 nm in der Polymermatrix verteilt. Durch geeignete Wahl der Reaktionskomponenten und der Reaktionsbedingungen kann die Clustergröße und Clusterverteilung gezielt eingestellt werden.

Die erfindungsgemäßen Kompositmaterialien eignen sich im Falle der Verwendung transparenter Polymerkomponenten hervorragend für optische Anwendungen. Es sind sowohl optisch transparente Formkörper als auch Beschichtungen herstellbar, welche z. B. durch Laser-Writing, Prägen oder Photomasken-Technik strukturiert werden können.

Spezielle Anwendungsgebiete sind:
- abstimmbare strukturierte lineare optische Elemente für passive Anwendungen, wie Filter oder Wellenleiter;
- abstimmbare strukturierte nicht-lineare optische Elemente für aktive Anwendungen, wie Signalverarbeitung, Komputation, Frequenzverdoppelung oder -verdreifachung, Lichtverstärkung für optische Informationsübertragung, Lasing, Laser-Selbstfokussierung, Wellenmischen, Phasenkonjugation oder Holographie, z. B. optische Schalter, ausbleichbare Absorber und holographische Elemente;
- Photovoltaische Festkörperzellen, photoelektrochemische Solarzellen und Quantenpunkt-Halbleiter.

Die folgenden Beispiele erläutern die Erfindung.

### Beispiel 1

2·10⁻³ mol Cadmiumacetat werden bei Raumtemperatur in 200 ml Ethanol gelöst und mit 2·10⁻³ mol 3-Aminopropyltriethoxysilan versetzt. Die Mischung wird unter N₂-Atmosphäre entgast. Zur Mischung werden 5·10⁻³ mol H₂S gegeben und 10 Minuten bei Raumtemperatur gerührt. Anschließend werden im Vakuum 150 ml Lösungsmittel abdestilliert.

Die erhaltene Lösung wird zuerst mit 2·10⁻¹ mol 3-Glycidyloxypropyltrimethoxysilan und nach 15 Minuten Rühren mit 2·10⁻² mol Aluminiumtributoxyethanolat versetzt. Nach 30 Minuten Rühren bei Raumtemperatur wurden zu der Mischung für die Hydrolyse 3,6·10⁻¹ mol Wasser gegeben. Anschließend wird 3 Stunden gerührt.

Die resultierende Beschichtungslösung wird durch Tauchen auf Glassubstrate aufgebracht und 60 Minuten bei 60°C gehärtet. Zur Herstellung von Formkörpern wird das restliche Lösungsmittel im Vakuum abdestilliert und die erhaltene viskose Lösung in eine Form gegossen und bei 60°C 1 Stunde ausgehärtet.

### Beispiel 2

Es wird wie in Beispiel 1 verfahren, allerdings wird statt 3-Aminopropyltriethoxysilan N-[2-Aminoethyl]-3-aminopropyltrimethoxysilan verwendet.

### Beispiel 3

Es wird wie in Beispiel 1 verfahren, allerdings wird statt 3-Aminopropyltriethoxysilan triaminomodifiziertes Propyltrimethoxysilan [H₂N-(CH₂)₂ NH(CH₂)₂ NH(CH₂)₃-Si(OCH₃)₃] verwendet.

### Beispiel 4

Es wird wie in Beispiel 1 verfahren, allerdings wird statt 3-Aminopropyltriethoxysilan 3-Mercaptopropyltriethoxysilan verwendet.

### Beispiel 5

2·10⁻³ mol Cadmiumacetat werden bei Raumtemperatur in 200 ml Ethanol gelöst und mit 2·10⁻³ mol Bis[3-triethoxysilylpropyl]-tetrasulfid versetzt. Die Mischung wird unter N₂-Atmosphäre entgast. Anschließend werden zur der Lösung 2·10⁻² mol Natriumborhydrid in 10 ml Ethanol gegeben und 30 Minuten bei Raumtemperatur gerührt und anschließend im Vakuum 150 ml von dem Lösungsmittel abdestilliert.

Die erhaltene Lösung wird zuerst mit 2·10⁻¹ mol 3-Glycidyloxypropyltrimethoxysilan und nach 15 Minuten Rühren mit 2·10⁻² mol Aluminiumtributoxyethanolat versetzt. Nach 30 Minuten Rühren bei Raumtemperatur wurden zu der Mischung für die Hydrolyse 3,6·10⁻¹ mol Wasser gegeben. Anschließend wird 3 Stunden gerührt.

Die resultierende Beschichtungslösung wird durch Tauchen auf Glassubstrate aufgebracht und 60 Minuten bei 60°C gehärtet. Zur Herstellung von Formkörpern wird das restliche Lösungsmittel im Vakuum abdestilliert und die erhaltene viskose Lösung in eine Form gegossen und bei 60°C 1 Stunde ausgehärtet.

### Beispiel 6

Es wird wie in Beispiel 1 verfahren, allerdings wird statt 3-Aminopropyltriethoxysilan frisch aus 2·10⁻² (3-Triethoxysilylpropyl)-bernsteinsäureanhydrid und 2·10⁻² mol Wasser hergestellte (3-Triethoxysilylpropyl)-bernsteinsäure verwendet.

### Beispiel 7

2·10⁻³ mol Cadmiumacetat werden bei Raumtemperatur in 200 ml Ethanol gelöst und mit 2·10⁻² mol 3-Aminopropyltriethoxysilan versetzt. Die Mischung wird unter N₂-Atmosphäre entgast. Zur Mischung werden 2·10⁻² mol H₂S gegeben und 10 Minuten bei Raumtemperatur (RT) gerührt und anschließend 150 ml von dem Lösungsmittel abdestilliert.

Die erhaltene Lösung wird dann mit 2·10⁻¹ mol 3-Methacryloxypropyltrimethoxysilan versetzt und 15 Minuten bei RT gerührt. Zu der Mischung wird für die Hydrolyse 3,3·10⁻¹ mol H₂O gegeben und 3 Stunden bei Raumtemperatur gerührt. Zum Beschichten von Substraten und zur Herstellung von Formkörpern wird der erhaltenen viskosen Lösung 1 Gew.-% tert-Butylperbenzoat zugesetzt. Die weitere Bearbeitung erfolgt wie in Beispiel 1.

### Beispiel 8

Es wird wie in Beispiel 7 verfahren, allerdings wird statt 3-Aminopropyltriethoxysilan N-[2-Aminoethyl]-3-aminopropyltrimethoxysilan verwendet.

### Beispiel 9

Es wird wie in Beispiel 7 verfahren, allerdings wird statt 3-Aminopropyltriethoxysilan triaminomodifiziertes Propyltrimethoxysilan [H₂N-(CH₂)₂ NH(CH₂)₂ NH(CH₂)₃ Si(OCH₃)₃] verwendet.

### Beispiel 10

Es wird wie in Beispiel 7 verfahren, allerdings wird statt 3-Aminopropyltriethoxysilan 3-Mercaptopropyltriethoxysilan verwendet.

### Beispiel 11

2·10⁻³ mol Cadmiumacetat werden bei Raumtemperatur in 200 ml Ethanol gelöst und mit 2·10⁻² mol Bis-[3-triethoxysilylpropyl]-tetrasulfid versetzt. Die Mischung wird unter N₂-Atmosphäre entgast. Anschließend wird zu der Mischung 2·10⁻² mol Natriumborhydrid in 10 ml Ethanol gegeben und 30 Minuten bei RT gerührt. Nach Abdestillieren von 150 ml Lösungsmittel erfolgt die weitere Bearbeitung wie in Beispiel 7.

### Beispiel 12

Es wird wie in Beispiel 7 verfahren, allerdings wird statt 3-Aminopropyltriethoxysilan frisch aus 2·10⁻² (3-Triethoxysilylpropyl)-bernsteinsäureanhydrid und 2·10⁻² mol Wasser hergestellte (3-Triethoxysilylpropyl)-bernsteinsäure verwendet.

### Beispiel 13

Es wird wie in Beispiel 1 verfahren, allerdings wird statt Cadmiumacetat Silbernitrat verwendet.

### Beispiel 14

Es wird wie in Beispiel 2 verfahren, allerdings wird statt Cadmiumacetat Silbernitrat verwendet.

### Beispiel 15

Es wird wie in Beispiel 3 verfahren, allerdings wird statt Cadmiumacetat Silbernitrat verwendet.

### Beispiel 16

Es wird wie in Beispiel 4 verfahren, allerdings wird statt Cadmiumacetat Silbernitrat verwendet.

### Beispiel 17

Es wird wie in Beispiel 5 verfahren, allerdings wird statt Cadmiumacetat Silbernitrat verwendet.

### Beispiel 18

Es wird wie in Beispiel 6 verfahren, allerdings wird statt Cadmiumacetat Silbernitrat verwendet.

### Beispiel 19

Es wird wie in Beispiel 7 verfahren, allerdings wird statt Cadmiumacetat Silbernitrat verwendet.

### Beispiel 20

Es wird wie in Beispiel 8 verfahren, allerdings wird statt Cadmiumacetat Silbernitrat verwendet.

### Beispiel 21

Es wird wie in Beispiel 9 verfahren, allerdings wird statt Cadmiumacetat Silbernitrat verwendet.

### Beispiel 22

Es wird wie in Beispiel 10 verfahren, allerdings wird statt Cadmiumacetat Silbernitrat verwendet.

### Beispiel 23

Es wird wie in Beispiel 11 verfahren, allerdings wird statt Cadmiumacetat Silbernitrat verwendet.

### Beispiel 24

Es wird wie in Beispiel 12 verfahren, allerdings wird statt Cadmiumacetat Silbernitrat verwendet.

### Beispiel 25

Es wird wie in Beispiel 7 verfahren, allerdings wird statt 3-Aminopropyltriethoxysilan Methacrylsäure verwendet.

### Beispiel 26

Es wird wie in Beispiel 25 verfahren, allerdings wird statt Cadmiumacetat Silbernitrat verwendet.

### Beispiel 27

Es wird wie in Beispiel 25 verfahren, allerdings wird statt 3-Methacryloxypropyltrimethoxysilan Triethylenglykoldimethacrylat verwendet.

### Beispiel 28

Es wird wie in Beispiel 27 verfahren, allerdings wird statt Cadmiumacetat Silbernitrat verwendet.

### Beispiel 29

0,1 mol Cadmiumacetat werden bei Raumtemperatur in 250 ml Ethanol gelöst und mit 2 mol 3-Aminopropyltriethoxysilan versetzt. Die Mischung wird unter N₂ Atmosphäre entgast. Zur Mischung werden 0,1 mol (CH₃)₃-Si-S-Si(CH₃)₃ (verdünnt mit Tetrahydrofuran 1:1) tropfenweise zugegeben. Anschließend werden im Vakuum 200 ml Lösungsmittel abdestilliert.

Die weitere Verarbeitung erfolgt wie in Beispiel 1. In Abwandlung dieses Verfahrens werden die Bedingungen der Beispiele 2 bis 4 und 13 angewandt.

### Beispiel 30

0,1 mol Zinkacetat (Zn(Ac)₂·2H₂O) werden bei 80°C (3h) in 260 ml Ethanol gelöst, die Lösung auf Raumtemperatur abgekühlt und mit 2 mol 3-Aminopropyltriethoxysilan versetzt. Die Mischung wird mit N₂ begast.

Die weitere Verarbeitung erfolgt wie in Beispiel 29.

### Beispiel 31

Es wird wie in Beispiel 30 verfahren, jedoch verwendet man Bleiethoxyethanolat anstelle des Zinkacetats.

### Beispiel 32

0,01 mol HAuCl₄ werden in 50 ml Ethanol gelöst und mit triaminofunktionalisiertem Silan behandelt (das Molverhältnis Au/Si liegt im Bereich von 1/5 bis 1:100). Dabei kommt es zur spontanen Metallclusterbildung und Entstehung eines langzeitstabilen Sols. Die weitere Verarbeitung erfolgt wie in Beispiel 7, d.h. die Lösung wird mit 0,2 mol 3-Methacryloxypropyltrimethoxysilan (MEMO) versetzt.

### Beispiel 33

Es wird wie in Beispiel 32 verfahren, jedoch verwendet man Silberacetat bzw. -nitrat anstelle von HAuCl₄.

### Beispiel 34

Es wird wie in Beispiel 32 verfahren, jedoch verwendet man H₂PtCl₆ anstelle von HAuCl₄.

### Beispiel 35

0,01 mol HAuCl₄ werden in 50 ml Ethanol gelöst und mit N-Aminoethyl-3-aminopropyltrimethoxysilan (DIAMO) behandelt. Anschließend werden 0,1 mol MEMO-Vorhydrolysat zugegeben. Die resultierende Beschichtungslösung wird mit 0,1 Gew.-% Azoisobutyronitril-Starter versetzt und zur Beschichtung von Glassubstraten weiterverwendet. Nasse Filme werden photothermisch behandelt (1 min, UV, 120°C). Dabei kommt es zur simultanen Au-Teilchenbildung und Matrixhärtung.

### Beispiel 36

Es wird wie in Beispiel 35 verfahren, jedoch verwendet man Silberacetat bzw. -nitrat anstelle von HAuCl₄.

### Beispiel 37

Es wird wie in Beispiel 35 verfahren, jedoch verwendet man H₂PtCl₆ anstelle von HAuCl₄.

### Beispiel 38

Nanokristallines ZnO wird in Ethanol mit DIAMO versetzt (Molverhältnis ZnO/DIAMO = 1:20) und bei Raumtemperatur in MEMO-Vorhydrolysat eingerührt. Das ZnO/MEMO-Molverhältnis ist variabel zwischen 1/3 und 1:100. Das Lösungsmittel wird abgezogen und das Produkt zur Herstellung von Formkörpern verwendet.

### Beispiel 39

Es wird wie in Beispiel 38 verfahren, jedoch verwendet man TiO₂ anstelle von ZnO.

## Patentansprüche

1. Verfahren zur Herstellung von nanoskalige Teilchen enthaltenden Kompositmaterialien, dadurch gekennzeichnet, daß man in einem organischen Lösungsmittel
a) eine in dem Lösungsmittel lösliche Verbindung eines Metalls der Gruppen 6 bis 15 des Periodensystems oder der Lanthaniden mit
b) einem Fällungsreagenz zur Bildung von Antimoniden, Arseniden, Chalkogeniden, Halogeniden oder Phosphiden des Metalls der Metallverbindung (a)
in Gegenwart von
c) einer bifunktionellen Verbindung, die mindestens eine Elektronenpaar-Donorgruppe und mindestens eine durch Polymerisation oder Polykondensation in ein organisches oder anorganisches Netzwerk überführbare Gruppe aufweisen,
umsetzt, das erhaltene stabilisierte Sol von nanoskaligen Teilchen mit
d) einer thermisch oder photochemisch zu einem Polymer härtbaren oder polymerisierbaren Verbindung und
e) einem Polymerisationsinitiator vermischt,
eine Hydrolyse und Polykondensation der gegebenenfalls anwesenden, in ein anorganisches Netzwerk überführbaren Gruppen durchführt und das Material thermisch oder photochemisch härtet.

2. Verfahren nach Anspruch 1, dadurch gekennzeichnet, daß man eine Lösung der thermisch oder photochemisch zu einem Polymer härtbaren oder polymerisierbaren Verbindung (d) in einem organischen Lösungsmittel verwendet.

3. Verfahren nach Anspruch 1, dadurch gekennzeichnet, daß man das stabilisierte Sol von nanoskaligen Teilchen zusätzlich mit einem in organischen Lösungsmitteln löslichen Polymer (f) vermischt.

4. Verfahren nach Anspruch 1, dadurch gekennzeichnet, daß man als organische Lösungsmittel Alkohole, Ether, Ester, aliphatische oder aromatische Kohlenwasserstoffe verwendet.

5. Verfahren nach Anspruch 1, dadurch gekennzeichnet, daß man als Fällungsreagenzien (b) Salze der entsprechenden Anionen, die entsprechenden Wasserstoffverbindungen oder Verbindungen verwendet, aus denen das eigentliche Fällungsmittel in situ freigesetzt wird.

6. Verfahren nach Anspruch 1, dadurch gekennzeichnet, daß das Fällungsreagenz (b) in geringem stöchiometrischem Überschuß, bezogen auf die Metallverbindung (a), eingesetzt wird.

7. Verfahren nach Anspruch 1, dadurch gekennzeichnet, daß das Molverhältnis der Metallverbindung (a) zu der bifunktionellen Verbindung (c) etwa 1:1 bis 1:50 beträgt.

8. Verfahren nach Anspruch 1, dadurch gekennzeichnet, daß die thermisch oder photochemisch zu einem Polymer härtbare oder polymerisierbare Verbindung (d) und das gegebenenfalls zugemischte, in organischen Lösungsmitteln lösliche Polymer (f) in solchen Mengen verwendet, daß das erhaltene Kompositmaterial 0,01 bis 90 Gewichtsprozent nanoskalige Teilchen und 10 bis 99,99 Gewichtsprozent Polymermatrix enthält.

9. Nanoskalige Teilchen enthaltende Kompositmaterialien, erhältlich nach dem Verfahren von Anspruch 1.

10. Kompositmaterialien nach Anspruch 9 in Form von Beschichtungen oder Formkörpern.

11. Verwendung von transparenten Kompositmaterialien nach Anspruch 10 für optische Elemente.

## Claims

1. Process for producing composite materials containing nanoscaled particles, characterized in that in an organic solvent
a) a compound, which is soluble in the solvent, of a metal of the groups 6 to 15 of the periodic system or of the lanthanides,
is reacted with
b) a precipitating agent for forming antimonides, arsenides, chalcogenides, halides or phosphides of the metal of the metal compound (a)
in the presence of
c) a bifunctional compound which features at least one electron pair-donor group and at least one group capable of being converted into an organic or inorganic network by polymerization or polycondensation;
the resulting stabilized sol of nanoscaled particles is mixed with
d) a compound capable of being thermally or photochemically cured to form a polymer, and
e) a polymerization initiator;
a hydrolysis and polycondensation of the optionally present groups that can be converted into an inorganic network is conducted; and the material is cured thermally or photochemically.

2. Process according to claim 1, characterized in that a solution of compound (d) which is capable of being cured or polymerized thermally or photochemically to form a polymer in an organic solvent is used.

3. Process according to claim 1, characterized in that the stabilized sol of nanoscaled particles is mixed additionally with a polymer (f) which is soluble in organic solvent.

4. Process according to claim 1, characterized in that alcohols, ethers, esters, aliphatic or aromatic hydrocarbons are used as organic solvents.

5. Process according to claim 1, characterized in that as precipitating agents (b) salts of the corresponding anions, the corresponding hydrogen compounds or compounds from which the actual precipitating agent is released in situ are used.

6. Process according to claim 1, characterized in that the precipitating agent (b) is used in small stoichiometric excess, based on the metal compound (a).

7. Process according to claim 1, characterized in that the molar ratio of the metal compound (a) to the bifunctional coumpound (c) is about 1:1 to 1:50.

8. Process according to claim 1, characterized in that said compound (d) which is capable of being polymerized and cured thermally or photochemically to form a polymer and said polymer (f) which is soluble in organic solvents and is optionally admixed are used in such amounts that the resulting composite material contains 0.01 to 90 percent by weight of nanoscaled particles and 10 to 99.99 percent by weight of polymer matrix.

9. Composite materials containing nanoscaled particles, obtainable according to the process of claim 1.

10. Composite materials according to claim 9 in the form of coatings or molded articles.

11. Use of transparent composite materials according to claim 10 for optical elements.

## Revendications

1. Procédé de préparation de matériaux composites contenant des particules à l'échelle nanométrique, caractérisé en ce qu'on fait réagir dans un solvant organique :
a) un composé, soluble dans le solvant organique, d'un métal des groupes 6 à 15 du tableau périodique ou des lanthanides avec
b) un réactif de précipitation pour former des antimonides, des arséniures, des chalcogénures, des halogénures ou des phosphures du métal du composé métallique (a), en présence
c) d'un composé bifonctionnel qui présente au moins un groupe donneur d'une paire d'électrons et au moins un groupe pouvant être transformé en un réseau organique ou inorganique par polymérisation ou polycondensation,
on mélange le sol stabilisé obtenu, formé de particules à l'échelle nanométrique, avec
d) un composé pouvant être durci ou polymérisé en un polymère par voie thermique ou photochimique et
e) un initiateur de polymérisation,
on effectue une hydrolyse et une polycondensation des groupes éventuellement présents pouvant être transformés en un réseau inorganique et on durcit le matériau par voie thermique ou photochimique.

2. Procédé selon la revendication 1, caractérisé en ce qu'on utilise une solution du composé (d), pouvant être durci ou polymérisé en un polymère par voie thermique ou photochimique, dans un solvant organique.

3. Procédé selon la revendication 1, caractérisé en ce qu'on mélange le sol stabilisé de particules à l'échelle nanométrique avec, en outre, un polymère (f) soluble dans des solvants organiques.

4. Procédé selon la revendication 1, caractérisé en ce qu'on utilise, comme solvants organiques, des alcools, des éthers, des esters, des hydrocarbures aliphatiques ou aromatiques.

5. Procédé selon la revendication 1, caractérisé en ce qu'on utilise, comme réactifs de précipitation (b), des sels des anions correspondants, les composés hydrogénés correspondants ou des composés à partir desquels l'agent de précipitation proprement dit est libéré *in situ.*

6. Procédé selon la revendication 1, caractérisé en ce qu'on utilise le réactif de précipitation en un excès légèrement supérieur à la quantité stoechiométrique par rapport au composé métallique (a).

7. Procédé selon la revendication 1, caractérisé en ce que le rapport molaire du composé métallique (a) au composé bifonctionnel (c) est d'environ 1:1 à 1:50.

8. Procédé selon la revendication 1, caractérisé en ce qu'on utilise le composé (d), pouvant être durci ou polymérisé en un polymère par voie thermique ou photochimique, et et le polymère (f) éventuellement ajouté, solubles dans des solvants organiques, en des quantités telles que le matériau composite obtenu contienne de 0,01 à 90 % en poids de particules à l'échelle nanométrique et de 10 à 99,99 % en poids de matrice polymère.

9. Matériaux composites contenant des particules à l'échelle nanométrique, qu'on peut obtenir selon le procédé de la revendication 1.

10. Matériaux composites selon la revendication 9 sous la forme de revêtements ou de corps moulés.

11. Utilisation de matériaux composites transparents selon la revendication 10 dans des éléments optiques.
